Europäisches Patentamt

European Patent Office

Office européen des brevets

(19)

(11) Publication number: **0 459 279 A1**

(12) **EUROPEAN PATENT APPLICATION**

(21) Application number: **91108221.2**

(22) Date of filing: **22.05.91**

(51) Int. Cl.⁵: **H04M 11/06**

(30) Priority: **30.05.90 US 530563**

(43) Date of publication of application:
**04.12.91 Bulletin 91/49**

(84) Designated Contracting States:
**DE FR GB**

(71) Applicant: **Hayes Microcomputer Products, Inc.**
**5835 Peachtree Corners East**
**Norcross Georgia 30092(US)**

(72) Inventor: **Dittakavi, Ashok**
**320 Canopy Cove**
**Alpharetta, Georgia 30201(US)**
Inventor: **Bunn, Fred A.**
**3733 Maryland Drive**
**Doraville, Georgia 30340(US)**
Inventor: **Siraj, Tariq M.**
**110 Seesen Court**
**Alpharetta, Georgia 30202(US)**
Inventor: **Humphries, Charles H., Jr.**
**2470 Old Peachtree Road**
**Lawrenceville, Georgia 30243(US)**
Inventor: **Pechey, William L.**
**Jays Lodge**
**Crays Pond, Reading RG8 7QG(GB)**

(74) Representative: **Patentanwälte Dr. Solf & Zapf**
**Zeppelinstrasse 53**
**W-8000 München 80(DE)**

(54) **Global line interface module construction and telecommunications device employing same.**

(57) A telecommunications device, such as a modem or a facsimile machine, for operation in a plurality of countries. The modem (10) has a modem engine (11) and a line interface module (12). The modem engine (11) contains a modem bit pump and other modem circuits (17), and is controlled by a controller (20). The line interface module (12) contains a line interface circuit (32) and a memory (33). The line interface circuit (32) contains the hardware required for compatibility with one or more selected countries. The memory (33) contains the specific operating requirements and parameters for that selected country. The modem (10) can be quickly configured for operation in a selected country by installing the line interface module (12) for that country in the modem (10).

Fig - 1

**Technical Field**

The present invention relates to telecommunications devices and particularly to devices of modular construction. It is a telecommunications device, such as a modem or a facsimile machine, having an engine which, when combined with a line interface module for controlling line interface parameters, is designed for use with the plurality of different telephone line interface parameters, supervisory signals, and regulatory/technical requirements encountered with respect to the differing telephone systems throughout the world.

**Background of the Invention**

Data communications through modems and facsimile machines is rapidly becoming a business necessity, and a matter of common personal use throughout the industrialized world. In particular, the developed countries with modern switched and lease line telephone systems are ones in which the use of small computers has proliferated with incredible rapidity in the last decade.

In recent years, data communications protocols, at least for the United States and western Europe, have tended to become more standardized, with many popular modems implementing data communications protocols recommended by the International Consultive Committee on Telephony and Telegraphy (CCITT). Thus, it would appear on its face that modem communication is becoming standardized and one might expect great portability of modems among various countries. Indeed, many customers expect same, but are often disappointed when they discover that such is not the case. Users encounter problems when they attempt to use a modem designed for connection to the public switched telephone network in a particular country, and approved by the appropriate local regúlatory body in such country, with the telephone system of another country. This apparent problem arises because the standardized data communications protocols are defined for signaling, handshaking, signal encoding, timing, and similar protocol parameters once a call connection has been established. Such communications protocols do not address factors such as physical connectors to telephone systems, local requirements for detection of a line being in use for single line, key line sets and party lines, and various requirements for supervisory and dialing signals to operate the switching equipment in public switched telephone networks of various countries. In other words, the standardized communications protocols become standardized at the point at which a call has been established between two modems connected to the telephone network in a manner that is electrically and legally appropriate at the local telephone port in each country at which each respective modem is located.

This has led to a situation in which modem manufacturers can design bit pumps for modem engines which implement standardized protocols, such as the recommendations of the CCITT, and which are therefore useable over a very wide geographic area. However, ability to design bit pumps does not translate to the ability to quickly and economically provide modems which will sell well and which are legally useable in a plurality of different countries. This occurs because the electrical interface and public switched telephone network (PSTN) operating requirements are still governed by local national law in most of the industrialized countries. For example, modems implementing CCITT Recommendation V.22bis are commonly used in the United States and countries of western Europe including the United Kingdom, France, the Netherlands, Italy, Federal Republic of Germany and Switzerland. Thus, a modem user in the United States can expect to call a party in Great Britain using a modem which implements CCITT Recommendation V.22 bis and successfully communicate with his or her British counterpart. However, if such a party transports his or her modem (which may be included as part of a portable computer) to the United Kingdom, it will be both illegal to, and electrically difficult to successfully, connect the modem to a port of the public switched telephone network in Great Britain.

In the past, this has led to requirements that modem manufacturers, particularly those in the United States, design individual interface circuits to meet the regulatory and electrical peculiarities of each country, even though the data communications protocols are standardized. This significantly reduces the economy of scale of manufacturing standard products and thus raises the cost to the manufacturer. When relatively small differences in electrical interface requirements and operating parameters are required among various countries, it requires the manufacturer to make separate manufacturing runs, and stock virtually the same modem with technically minor but legally significant variations in the circuitry for the various countries in stock. This ties up more of the manufacturers capital in inventory or increases the required lead time to fill an order.

The empirically slow approval process which the bureaucracies of regulatory bodies in many European countries have applied to products of American manufacturers submitted for testing have put American manufacturers at a serious competitive disadvantage in recent years. Thus, there is a significant need in the art of construction of modems to provide apparatus which will overcome the drawbacks of the prior art, particularly the requirement that a large plurality of country specific modem devices be separately manufactured and stocked, or manufactured to order and thereby requiring expensive changeovers on assembly lines and putting the manufacturer at a competitive disadvantage by requiring either maintenance of significant inventories or long lead times.

In the past, it has been known to modularize certain functions of modems to allow for upgrading or changing of particular characteristics in particular communications protocols. For example, U.S. Patent 4,847,863 to Watson discloses a modularly expandable modem in which a standard telephone line interface, a universal asynchronous receiver-transmitter (UART), and a serial interface are provided with a standard interface to an expansion board. Variable expansion circuit boards for implementing different communications protocols, particularly at differing speeds, are shown.

Japanese Publication 62-130040 shows a modem with a replaceable read only memory card for selecting and implementing different communications protocols by installing different read only memories in order to implement different communications protocols. None of these devices address a requirement for different electrical line interface and line interface parameters.

U.S. Patent 4,868,852 to Tsumura shows a facsimile machine employing a modem in which a variable attenuator is inserted between the modem and the line connection to provide differing fixed signal levels for DTMF signals and facsimile transmission signals output for different countries. This overcomes certain country specific limitations for facsimile machines, i.e., different regulatory requirements with respect to line signal levels for both tone dialing (DTMF) and facsimile transmissions. It does not address different dialing signaling requirements, supervisory signaling requirements, and other electrical interface operating parameters for direct connect automatic dialing devices such as modern intelligent modems.

U.S. Patent 4,578,796 to Charalambous et al. shows a digital signal processing (DSP) modem with specific dedicated line signal processors for dial up and leased telephone lines with a common signal processor which is programmable in order to implement different communications protocols. In other words, it shows programmability and flexibility of a bit pump for which the communications protocol may be changed with specific fixed electrical line interfaces, one for the dial up network and one for leased lines.

None of the prior art discloses or suggests a structure of a modular interface which can overcome the problems outlined above resulting from the different line interface parameter requirements of the different countries. Thus, there is a need in the art for a line interface structure which can eliminate the requirements of manufacturing of multiple electrical designs, each of which is country specific.

Adaptability of a basic data communications device designed to different countries has been limited in the prior art to adjustment of plural signal levels or modular interchangeability of controllers for different communications protocols, including differing communications speeds. Heretofore, the prior art has not defined a line interface, and a set of line interface operating parameters which, together with appropriate modular line interface apparatus, creates a modem which is readily programmable to electrically interface to the telephone networks of a plurality of different countries. Prior art modems do not address the proper response to different supervisory signals, presentation of appropriate line impedances under varying circumstances, proper dialing signal characteristics, and the observance of other line interface operating parameters. Prior art modems require manufacture of a large number of separate physical implementations of a modem employing one or more basic data communications protocols.

## Summary of the Present Invention

Generally stated, the present invention is a line interface module structure for use in a telecommunications device, such as a modem or a facsimile machine, which fully decouples the device engine and communications protocol section of the device from the line interface appropriate to connect to telephone networks of various countries. This allows a very small number of interchangeable line interface modules to be used to properly interface the device engine to the telephone networks in a large number of countries.

Generally stated, the present invention includes a plurality of line interface modules, all useable with the same device engine and controller card, each line interface module including both the necessary line interface hardware for meeting a plurality of country specific line interface operating parameters as well as communication signal level parameters.

Additionally, the present invention defines a device engine module/line interface module interface specification in a manner which allows the same basic line interface module, which meets a plurality of differing country specific line interface operational parameter requirements, to be used with a plurality of different device engine modules. Thus, according to the present invention, once a line interface module is designed which meets the interface specifications and requirements for one or more countries, the telecommunications device manufacturer is free to design a plurality of different device engine modules which properly interface to this module, without having to redesign an interface for each country, or even a different line interface module for several countries.

Also, broadly stated, the line interface module of the present invention is divided into two parts: the line interface circuits, which include country specific or country group specific hardware elements and generic line interface hardware elements; and a table of global logical operating parameters ("GLOP"). An important aspect of the GLOP table is that it is specifically designed to contain information for a particular country which:

(a) control line interface parameters which are controlled by the device engine module, such as transmit signal level and received signal thresholds;

(b) contains parameters for country specific line interface parameters such as the duty cycle of dial pulses, certain tests to be conducted prior to going off-hook and other parameters which result in control of the circuits on the line interface module.

It is preferable to keep the controller (which is almost always constructed around a microprocessor or microcomputer) on the device engine module card. The inventors of the present invention have extensively studied line interface requirements of various countries throughout the world and believe they have defined a line interface bus which provides sufficient flexibility to implement a line interface for a telecommunications device for any country in the world.

In one form of the present invention, the actual telephone line and telephone set jacks are included on the device engine module. They are embodied in standard six conductor RJ-11 receptacles. For countries requiring different receptacles for telephone set and telephone line jacks, an adaptor cord with an RJ-11 male connector and a country specific telephone line and telephone set connectors are provided.

In another form of the present invention, the actual telephone line and telephone set jacks are included in a cable assembly which also embodies the line interface hardware and the GLOP table. For each country, a cable assembly, having the telepone connectors required for that country, are provided. The cable assembly is then plugged into the device engine module so that the combination is properly configured for the desired country.

Therefore, it is an object of the present invention to provide a modular modem construction which properly addresses the cost duplication and multiple product inventory problem facing a modern modem manufacturer seeking to do business internationally.

In particular, it is an object of the present invention to properly define a line interface bus between a line interface module and a device engine module which allows the device engine module to completely specify the communications protocols implemented by the device and the line interface module to specify all line interface parameters and implement all necessary line interface electrical parameters such as off hook impedance, off hook impedance during dialing, timing of dial pulses, requirements for line condition testing prior to going off hook, and the like.

It is a further object of the present invention to provide a telecommunications device of modular construction which maximizes the extent to which line interface parameter implementations are controlled by values in a table so that the manufacturer's design can be used even when line interface parameter specifications for a given country change simply by changing values in the GLOP tables which are provided with the product.

That the present invention achieves these objects and overcomes the drawbacks of the prior art will be appreciated from the detailed description below.

## Brief Description of the Drawings

Fig. 1 is a block diagram of a modem embodying the present invention.
Fig. 2 is a functional block diagram of line interface module 12.
Figures 3A-3F are diagrams of several of the circuits of line interface module 12.
Figure 4 is a block diagram of another modem embodying the present invention.

## Detailed Description

Turning to the drawing in which like numerals represent like parts throughout the several figures, the preferred embodiment of the present invention will now be described.

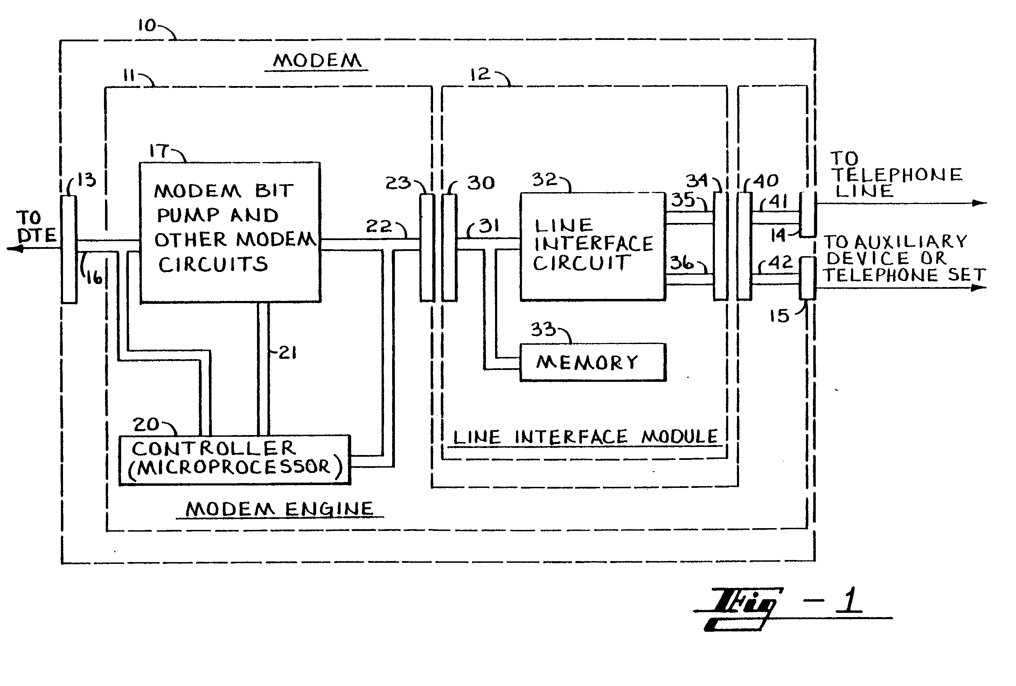

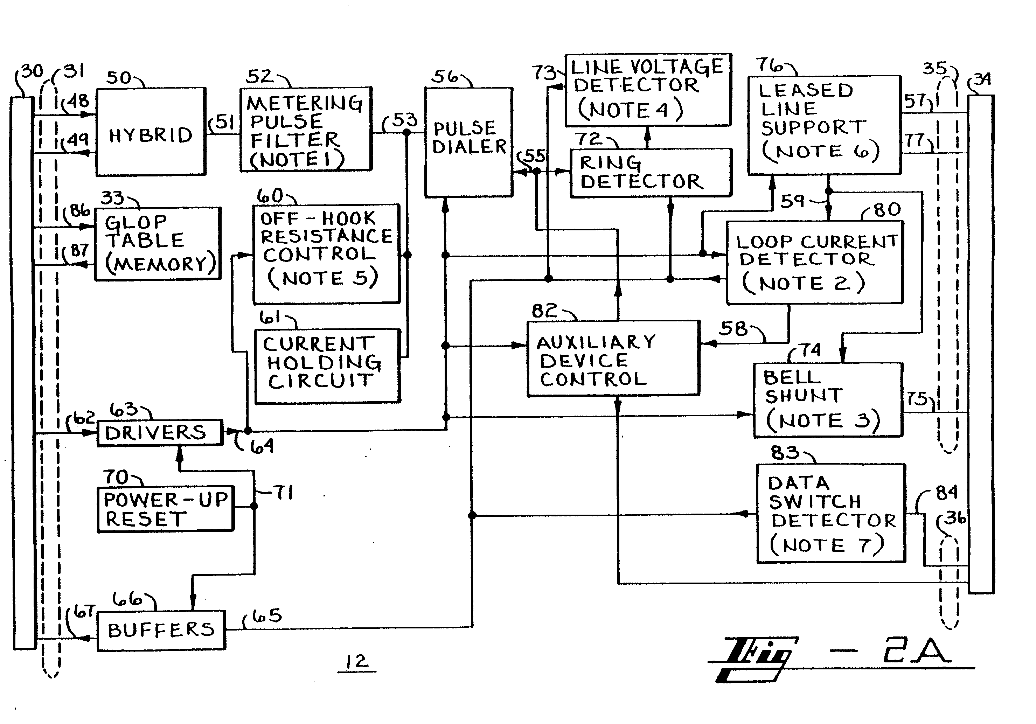

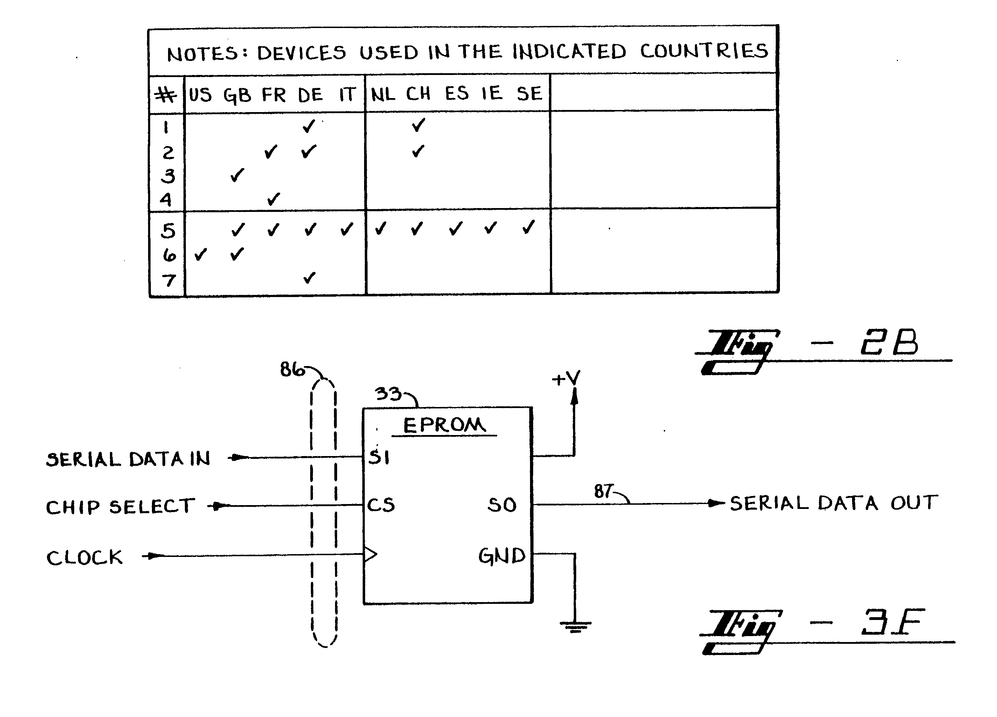

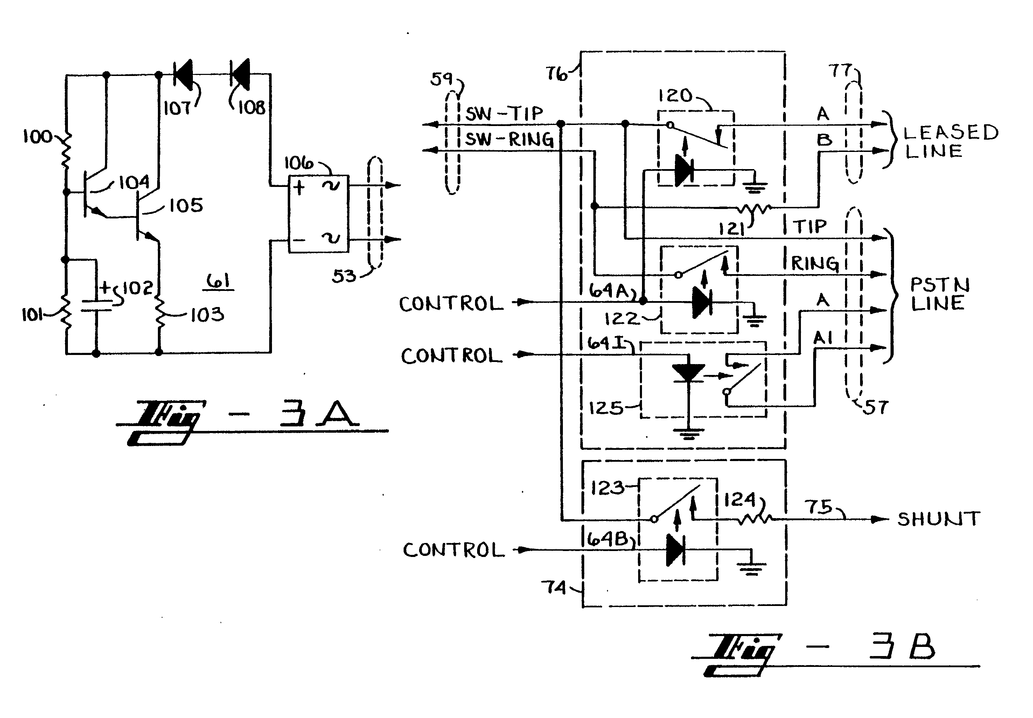

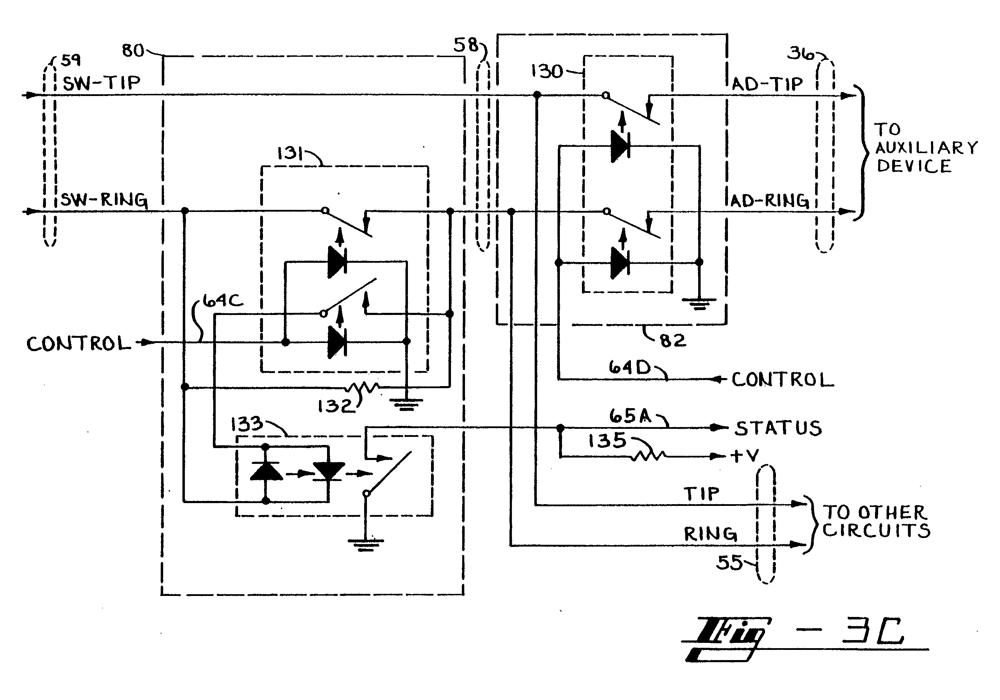

Figure 1 is a block diagram of a modem embodying the present invention. Modem 10 contains a modem engine module 11, a replaceable line interface module 12, a connector 13 for connecting modem 10 to data terminal equipment (DTE), a first telephone jack 14 for connecting modem 10 to a telephone line,

5

and a second telephone jack 15 for connecting modem 10 to an auxiliary device, such as a telephone set. Modem 10 may be a stand-alone modem, in which case connector 13 carries signals conforming to the standard of EIA RS-232-D. Modem 10 may also be an internal modem which is installed inside a personal computer, in which case connector 13 would typically plug into a connector which provides access to the control/address/data buses of the computer. Modem 10 accepts commands from the DTE, accepts data from the DTE and places modulated signals on the telephone line, accepts modulated signals from the telephone line, demodulates the signals and provides data to the DTE, seizes the telephone line and dials telephone numbers on the telephone line, detects incoming calls on the telephone line, and selectably connects the telephone set to or disconnects the telephone set from the telephone line. These functions, in general, and methods of accomplishing them are well known to those of ordinary skill in the art. For example, the following U.S. patents describe methods of construction and operation of modems: 4,742,482; 4,700,358; 4,808,937; and 4,894,847; all of which are assigned to the assignee of the present invention, and all of which are hereby incorporated herein by reference as if fully set forth herein. Modem engine module 11 contains a modem bit pump and other modem circuits 17 and a controller 20 which, in the preferred embodiment, is embodied in a microprocessor and its associated read only memory (ROM), random access memory (RAM), and non-volatile random access memory (NVRAM) or electrically programmable read only memory (EPROM). Modem bit pump 17 performs such functions as modulation, demodulation, frequency and/or phase locking, scrambling and descrambling, etc. Controller 20 controls the overall operation of modem 10 and may perform or assist in the performing of one or more of the functions described above for modem bit pump 17. Connector 13 is connected by bus 16 to modem bit pump 17 and to controller 20. In addition, modem bit pump 17 is connected by bus 21 to controller 20 so that controller 20 can monitor and control the operation of modem bit pump 17. Modem bit pump 17 and controller 20 are further connected by bus 22 to a connector 23, which allows modem engine module 11 to be connected to line interface module 12.

Modem 10 and modem engine 11 further comprise a second connector 40, for connection to line interface module 12, and conductors 41 and 42 for connecting jacks 14 and 15, respectively, to connector 40.

Line interface module 12 has a first connector 30 for connecting to connector 23, a second connector 34 for connecting to connector 40, a line interface circuit 32, and a memory 33. Bus 31 connects connector 30, line interface circuit 32, and memory 33. Buses 35 and 36 connect line interface circuit 32 to connector 34. It will be seen that buses 35 and 41, connectors 34 and 40, and jack 14 provide a connection between line interface circuit 32 and the telephone line. Likewise, buses 36 and 42, connectors 34 and 40, and jack 15 provide a connection between line interface circuit 32 and a connected telephone set or auxiliary device intended to be hooked to a telephone line, such as another modem, a facsimile machine, an answering machine, etc.

Connectors 23, 30, 34, and 40 allow a line interface module 12 to be easily removed and a replacement line interface module easily inserted. Each line interface module 12 is designed to meet the requirements and other specified parameters necessary for operation of modem 10 over the telephone system of a particular country.

The memory 33 for each line interface module 12 contains the information for a specified country. In the preferred embodiment, memory 33 is a sixteen by sixty-four bit electrically erasable programmable read only memory (EEPROM) such as the NMC9346, manufactured by National Semiconductor, Santa Clara, California. An EEPROM is used for memory 33 for convenience in manufacturing and in correcting any errors which may occur during manufacturing. However, it will be appreciated that the function of memory 33 could also be accomplished by a ROM or even a RAM with a battery backup. Table 1 provides a list of the parameters stored in the EEPROM.

# TABLE 1

## GLOP TABLE PARAMETERS

ANSWER DELAY
BLACKLISTING RULES
CALL PROGRESS RULES
COMMANDS SUPPORTED
CONFIGURATION
DIALING RULES/ORIGINATE HANDSHAKE
DIALTONE DETECTION
PULSE DIALING
SIGNAL LEVELS
S-REGISTER MIN/MAX/DEFAULT VALUES

The ANSWER DELAY location specifies the bandpass for detecting a ring signal, and the amount of time that the modem must wait after the end of a RING signal before going off-hook.

BLACKLISTING locations specify whether a BUSY result should be interpreted as a failed call, whether a number should be cleared from the blacklist after a predetermined time has expired, the maximum number of attempts to any particular number that results in a BUSY result, the time in which the maximum number of BUSY results are permitted before further attempts to that number are barred, the maximum number of attempts to any number where no valid answer tone is detected, the minimum separation time between an ERRONEOUS result and a retry to the same number, and a time, which if exceeded after an ERRONEOUS result without another call attempt, prevents further attempts to that telephone number.

CALL PROGRESS RULE locations specify whether a continuous tone should be interpreted as a BUSY signal if encountered during the originate handshake sequence and the criteria necessary to detect a BUSY signal, such as ON/OFF times.

COMMAND locations specify whether the following commands, features, and/or dial modifiers are supported: B commands which specify the communication standard (Bell 212 V.22, V.23 R1200/T75, V.23 T1200/R75, etc.) to be used for a particular operation; &D commands which control the Data Terminal Ready (DTR) options (ignore DTR signal, reset if DTR signal goes from logic one to logic zero, etc.); the &G commands which control the generation of guard tones; H commands which control hookswitch operation; &J commands which selects the choice of the telephone jack such as RJ-11/RJ-41S/RJ-45S or RJ-12/RJ-13; &L commands which select between dial up telephone line operation or point-to-point lease line operation; &P commands which control the ratio of off-hook (make) intervals to on-hook (break) intervals used for pulse dialings; commands which specify whether data encryption, the LAP-B protocol, the LAP-M protocol, or the X.25 protocol are supported; and commands which specify whether the modem will recognize a quiet answer.

CONFIGURATION locations specify: the number of bytes in the table, not including the checksum; the line interface module type and the Global Logical Operating Parameters (GLOP) country type, each line interface module type may provide hardware suitable for use in several different countries so the GLOP table contains the information for a specific country; the version of the table, an error condition should occur when the version in the table is a later version than the controller firmware allows; the revision level of the GLOP table for a specific country; and the checksum value.

DIALING RULES locations instruct the modem as to whether it must check the voltage on the telephone line to make sure that the line is not already in use by another device before the modem attempts to originate a call, whether it must check for loop current before originating or continuing to dial the call, whether to check the auxiliary device line current before originating a call, whether it must examine the line interface for a predetermined time before going off-hook so as to look for incoming ringing signals, whether the modem may connect if a valid answer tone has not been detected prior to carrier detection, whether the SHUNT relay should be enabled, whether BLACK LISTING is enabled, whether the V.25 calling tone sequence is enabled when originating a call, whether a lower resistance must be used when going off-hook, whether a lower resistance is required for pulse dialing, whether the modem must connect certain lines so as to alert other devices that the telephone line is now in use, whether leased line operation is on the normal tip/ring line pair or is on another line pair, and the maximum number of times a "comma" dial modifier can be used per dial attempt.

DIALTONE DETECTION locations specify the call progress filter bandpass characteristics to be used during dial tone detection, whether Morse coded dial tone should be detected as valid dial tones, whether blind dialing should be enabled, the level at which dial tones must be detected, the time to wait for a valid dial tone, the value for the minimum dial tone duration in order to accept a dial tone as valid, and the minimum number of Morse coded dial tone cycles necessary to validate a Morse coded dial tone if Morse coded dial tone detection has been enabled.

PULSE DIALING locations specify the break duration of the "Flash" timing, the digit and coding method to be used for pulse dialing (For example, the U.S. method (n = number of pulses, except 0 = 10 pulses, the (10-n) encoding method, and the (n + 1) encoding method), and the pulse dialing timing criteria such as make, break, and interdigit times.

SIGNAL LEVEL locations specify the normal DTMF transmit level and the maximum, minimum and default carrier transmit levels for PSTN and leased lines, and the FSK amplitude offset level for use in certain countries which do not permit FSK and PSK carriers to be transmitted at the same level.

S-REGISTER locations specify the minimum, maximum and default parameters for the S registers. The S registers control: rings to answer on, wait for blind dial tone, wait for carrier, comma timing, carrier loss timer, DTMF timing register, and the maximum line speed register.

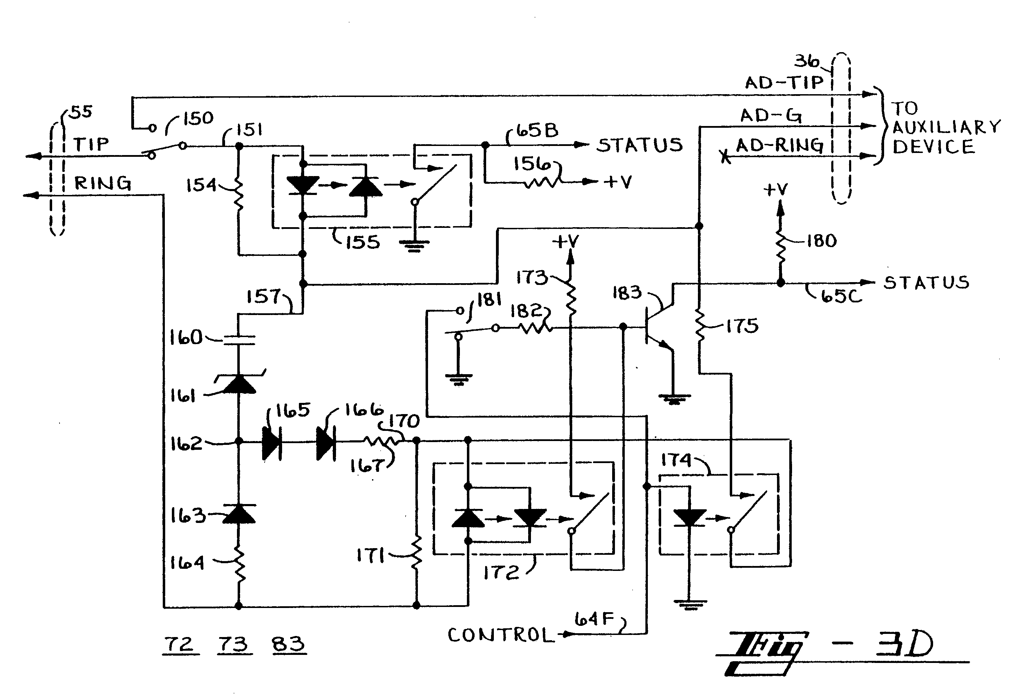

Figure 2 is a functional block diagram of line interface module 12. Depending upon the requirements for a particular country, module 12 will include at least some of the following components: a hybrid circuit 50, a metering pulse filter 52, a pulse dialer 56, an off-hook resistance control 60, a current holding circuit 61, drivers 63, buffers 66, a power up reset circuit 70, a ring detector circuit 72, a voltage detector circuit 73, a bell shunt circuit 74, a leased line support circuit 76, a loop current detector 80, an auxiliary device control 82, a data switch detector 83, and a memory 33 containing the GLOP table. Some circuits are used only in specified countries, as indicated by the notes. The notes are not intended to be limiting but merely indicate the current requirements for those countries which have been designated.

The signal to be transmitted over the telephone line is provided over signal path 48 to the input of hybrid 50. The signal received from the telephone line is provided by the output of hybrid 50 on signal path 49. The bidirectional port of hybrid 50 is connected by signal path 51 to a metering pulse filter circuit 52. Hybrid 50 and metering pulse filter circuit 52 are shown as separate items for clarity. However, metering pulse filter circuit 52 will typically be a part of the overall design of hybrid 50. In some countries a metering pulse (a burst of a high frequency tone) is periodically placed on the telephone line in order to measure the amount of time that the telephone line is in use. Metering pulse filter circuit 52 simply removes this pulse so it is not transmitted over signal path 49.

Metering pulse filter 52 is connected by signal path 53 to pulse dialer 56, off-hook resistance control 60, and current holding circuit 61. Current holding circuit 61 provides for a predetermined loop current when connected to the telephone line. As such, circuit 61 presents a high impedance to the audio signals on a telephone line. Hybrid circuit 50 and metering pulse filter circuit 52 are both AC coupled and therefore do not draw DC loop current.

In some countries there is a requirement for a lower off-hook resistance during pulse dialing. Off-hook resistance control 60 therefore provides an additional resistance, connected in parallel with current holding circuit 61, so as to lower the off-hook resistance during pulse dialing. In addition, current holding circuit 61 may not draw sufficient loop current from the line to communicate its off-hook state to the central office while a ring signal is present. In addition, some countries require a lower initial off-hook resistance to signal that the modem is off-hook than the resistance that is required to maintain the off-hook condition. Off-hook resistance control circuit 60 therefore provides the lower resistance required for these functions in those countries.

Pulse dialer 56 generates pulse dialing signals by selectively connecting and disconnecting current holding circuit 61 and off-hook resistance control 60 to the telephone line.

Pulse dialer 56 is connected by signal path 55 to ring detector 72 and auxiliary device control circuit 82. Ring detector circuit 72 is AC coupled to the telephone line and, during the presence of an incoming ring signal, provides a pulsed output signal.

Some countries, such as France, do not allow an automatic dialing unit, such as a modem, to go off-hook if the telephone line is already in use. Therefore, voltage detector circuit 73 monitors the voltage on the telephone line. If the voltage is greater than a predetermined value then the line is deemed to be available and, if the voltage is less than this value, the line is deemed to be already in use. For the preferred embodiment for use in France, this threshold value is between 40 and 45 volts. France also requires a modem to provide a switch or jumper so that the installer can disable the detector for unusual cases, such as when the normal off-hook voltage is more than the threshold value (as with a supercharged line), or when the normal on-hook loop voltage is less than the threshold value (as with a typical PBX line).

Leased line support circuit 76 provides the connection to PSTN telephone line 57 or to a leased line, if leased line operation is required or desired. Circuit 76 will connect either the standard telephone line 57 or the leased line 77 to signal path 59. The GLOP table in memory 33, as previously discussed, contains information regarding the different parameters, such as transmit levels, for the two different types of lines so that the modem will use the proper parameters when operating on a given line. The default mode of operation is the standard telephone line 57, which is the public switched telephone network line. Leased line support circuit 76 is connected by signal path 59 to loop current detector 80 and bell shunt 74.

Some countries, such as France, Germany and Switzerland, require the dialing circuit to reset if the loop current is interrupted for more than a predetermined time. Current detector 80 monitors the loop current drawn by current holding circuit 61 and, if required, off-hook resistance control circuit 60. It should be noted that the output of current detector 80 will alternate between a logic zero and a logic one during periods of pulse dialing.

Loop current detector circuit 80 is required in some countries, such as Germany, to detect the current drawn by the auxiliary device, such as a telephone set, and prevent the modem from originating a call if the auxiliary device is off-hook. Loop current detector circuit 80 is connected by signal path 58 to auxiliary device control circuit 82. Auxiliary device control 82 selectively connects the auxiliary device to signal path 58. Auxiliary device control 82 is connected by signal path 36 and connector 34 to the auxiliary device, as is more completely shown in Figure 1.

When a standard telephone set and a modem are connected in parallel the dial pulses from the modem can cause the bell of the telephone to ring partially or very weakly. To prevent this, during pulse dialing, the TIP and the SHUNT terminals of the telephone line are connected together through a predetermined resistance.

Some countries, such as Germany, require a stand alone modem to be able to connect to a telephone line with the press of a data key. This data key can be located at the modem and/or at the auxiliary device, such as a telephone set. When the data key is pressed on the auxiliary device, data switch detector circuit 83 detects the switch closure, via conductor 84 and signal path 36, and signals the modem to connect to the telephone line. In the preferred embodiment, the output signal will remain in the active state as long as the data key is depressed, the auxiliary device is off-hook, and the modem is on-hook. The change in the state of any one of these will cause the signal to change to the inactive state.

Control signals for module 12 are provided over signal path 62 to drivers circuit 63. The output of drivers circuit 63 is connected by signal path 64 to off-hook resistance control circuit 60, pulse dialer circuit 56, leased line support circuit 76, bell shunt circuit 74, loop current detector 80, and auxiliary device control circuit 82. Buffers 66 collect data signals from ring detector circuit 72, voltage detector circuit 73, loop current detector circuit 80, and data switch detector circuit 83, and provide these status signals over signal path 67 to the controlling device or DTE. In addition, a power-up reset circuit 70 is connected by signal path 71 to drivers 63 and buffers 66 so as to place all of the controlled circuits and all of the status signals in known states at power-up.

Control signals and data for memory 33 are provided over signal path 86 and the data output of memory 33 is provided over signal path 87.

In the above description the term "signal path" has been used to describe interconnection between different circuits. Generally, and in the preferred embodiment, the signal paths will be represented by one or more conductors.

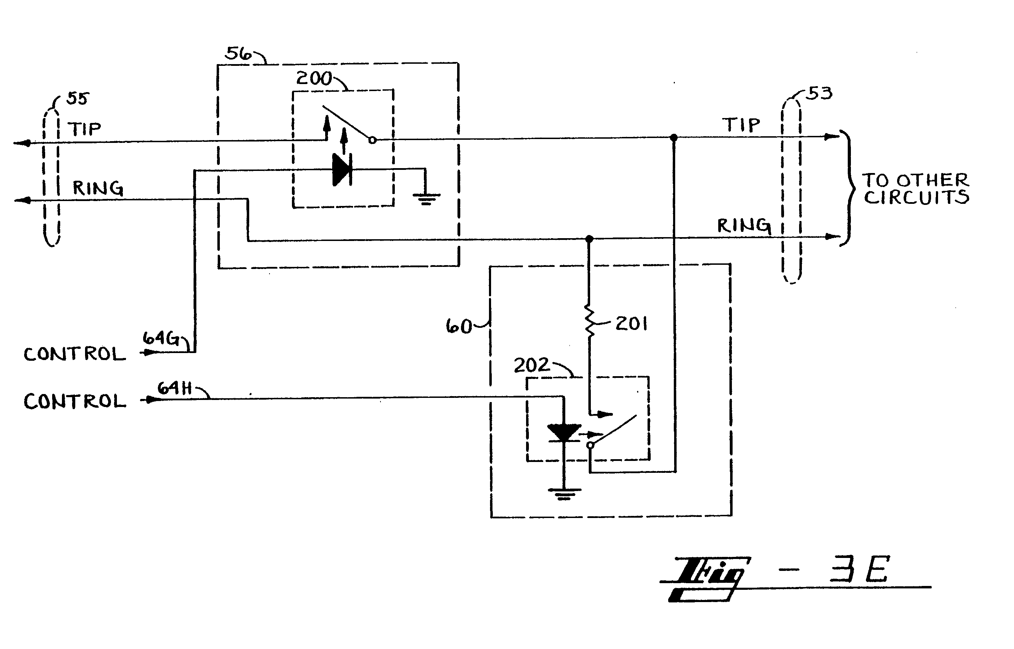

Figures 3A-3F are diagrams of several of the circuits of line interface module 12. Figure 3A is a schematic diagram of current holding circuit 61. Transistors 104 and 105 form a darlington circuit. The current drawn by the Darlington circuit is controlled by resistors 100 and 101, which form a voltage divider which is connected to the base of transistor 104, and resistor 103, which is connected in series with the emitter of transistor 105. Capacitor 102 is connected in parallel with resistor 101 so as to form a low pass filter which provides a filter DC voltage to the base of transistor 104. The circuit therefore provides a high impedance to AC signals and provides a low resistance path for the DC loop current. Full wave bridge 106 assures that the proper polarity voltage is always applied to transistors 104 and 105, regardless of the polarity of the voltage on signal path 53. Diodes 107 and 108, which are inserted in series with the positive output of bridge 106, work in conjunction with bridge 106 to insure that AC signals of peak-to-peak amplitude of less than 4.5 volts are not clipped by the circuit. Diodes 107 and 108 are only required for certain countries, such as Great Britain, Italy and Spain, but not for France and Germany. The actual current drawn by current holding circuit 61 will be dependent upon the voltage on signal path 53. A circuit which limits the current to a particular value, as is required in France, can be implemented by the use of a voltage regulating diode, such as a zener diode, in parallel with resistor 101. The actual values for the resistors will be dependent upon the DC current gain of transistors 104 and 105, desired cutoff frequency of the low pass filter formed by resistors 100 and 101 and capacitor 102, the amount of current that is required to be drawn by the current holding circuit 61, and the return loss requirements.

Figure 3B is a schematic diagram of leased line support circuit 76 and bell shunt circuit 74. Figures 3B-3E use optocouplers and solid state relays. It will be appreciated that solid state relays are, in effect, high current optocouplers. For line switching functions solid state relays, such as the LBA127 are preferred. In the preferred embodiment, devices 120, 122, 123, 125, 130, 131, 174, 200, and 202 are solid state relays. For status functions optocouplers, such as the LDA200 are preferred. In the preferred embodiment, devices 133, 155, and 172 are optocouplers. For conveneince, all optically-coupled switching device, such as optocouplers and solid state relays, will be referred to as optoisolators. Leased line support circuit 76 comprises optoisolators 120 and 122, and a resistor 121. Optoisolator 120 functions as a normally closed relay and optoisolator 122 functions as a normally open relay. Control line 64A is connected to the light emitting control diode of optoisolators 120 and 122. The normally closed contact of optoisolator 120 is connected between the A conductor of leased line 77 and the switched-tip (SW-TIP) conductor of signal path 59. The SW-TIP conductor is also connected to the TIP conductor of the public switched telephone network (PSTN) line 57. The switched-ring (SW-RING) conductor of signal path 59 is connected through resistor 121 to conductor B of leased line 77 and, through the normally open contact of optoisolator 122, to the RING conductor of PSTN line 57. When the control signal is a logic zero then the leased line is connected to signal path 59 whereas, when the control signal is a logic one, the PSTN line is connected to signal path 59.

Leased line support circuit 76 also provides for signaling over the A and A1 lines of the PSTN. The A and A1 lines of PSTN signal path 57 are connected to the normally open switch section of optoisolator 125. The control diode of optoisolator 125 is connected to CONTROL conductor 64I. In situations where signaling is required, a logic 1 is applied to conductor 64I whenever the modem is off-hook.

Bell shunt circuit 74 has an optoisolator 123 and a resistor 124. The control signal is applied via conductor 64B to the light emitting control diode of optoisolator 123. The relay section of optoisolator 123 functions as a normally open contact. The SW-TIP conductor of signal path 59 is selectively connected to SHUNT conductor 75 through the relay section of optoisolator 123 and resistor 124. The total effective resistance of the relay section of optoisolator 123 and resistor 124 is approximately 100 ohms.

Figure 3C is a schematic diagram of loop current detector 80 and auxiliary device control circuit 82. Auxiliary device control circuit 82 comprises a dual optoisolator 130, with both sections functioning as a normally closed relay contact. Control signals are applied over conductor 64D to the light emitting control diodes of optoisolator 130. When the control signal is a logic one the relay sections of optoisolator 130 open and disconnect the auxiliary device from signal path 58. Although the light emitting control diodes are shown in parallel it will be appreciated that it may be necessary to drive the diodes independently so as to prevent current hogging by one of the diodes. When the control signal is a logic zero the auxiliary device tip conductor (AD-TIP) and the auxiliary device ring conductor (AD-RING) are connected to the SW-TIP and SW-RING conductors, respectively, of signal path 59.

Loop current detector 80 has a dual optoisolator 131, a resistor 132, and a dual polarity optoisolator 133. Optoisolator 131 has a normally open relay section, a normally closed relay section, and two light emitting control diodes. The normally open section of optoisolator 131 and the two control diodes of optoisolator 133 are connected in series. The series combination is connected in parallel with the normally closed section of optoisolator 131 and resistor 132. This parallel combination is then connected in series between the SW-RING conductor and the RING conductor of signal paths 55 and 58. Control signals are applied via conductor 64C to the light emitting diodes of optoisolator 131. The normally open relay section of optoisolator 133 is connected by conductor 65A to a pullup resistor 135 and to the input of buffers 66. When the control signal on conductor 64C is a logic zero current flows from the SW-RING conductor through the normally closed relay section of optoisolator 131, through the normally closed relay section of optoisolator 130 to signal path 58. Because the light emitting control diodes of optoisolator 133 are connected in series with the normally open contact section of optoisolator 131 no current can flow through these diodes. Therefore, the status signal on conductor 65A is pulled to a logic one by pullup resistor 135.

If the control signal on conductor 64C is a logic one then current will flow from the SW-RING conductor through the control diodes of optoisolator 133 and the normally open (now closed) relay section of optoisolator 131 to signal path 58. If the modem or the auxiliary device is off-hook then current will flow through the control diodes of optoisolator 133, thereby closing the contact on the relay section of optoisolator 133 and causing status signal on conductor 65A to be a logic zero. The logic zero signals that the selected device is off-hook. In the preferred embodiment, the control signal on conductor 64C is in the active state (logic one) during the period when the modem has been instructed to seize the telephone line and, in accordance with the regulations of the particular country, is required to first determine whether the auxiliary device is in an off-hook condition. Once this determination has been made the control signal on conductor 64C reverts to a logic zero.

This circuit is also used to test for line current drawn by the modem, as required by countries such as France, Germany, and Switzerland. In this case, the control signal on conductor 64D is logic one, thereby isolating the auxiliary device. In this case the current detector 80 monitors the current drawn by the other modem circuits, such as the current holding circuit 61 and the off-hook resistance control circuit 60. The control signal on conductor 64C is made a logic one, thereby forcing any loop current through the control diodes of optoisolator 133, and causing the status signal on conductor 65A to be a logic zero. It should be appreciated that the status signal will alternate between a logic one and a logic zero during pulse dialing operations.

Dual optoisolator 131 is used so as to prevent the voltage drop caused by the control diodes of optoisolator 133 during periods when there is no need to monitor this status of the loop current. However, if the voltage drop across these control diodes can be tolerated then optoisolator 131 may be omitted and the control diodes of optoisolator 133 inserted in series with the SW-RING conductor between signal paths 58 and 59. Resistor 132 should be placed in parallel with the control diodes so as to prevent an open circuit when the available voltage is insufficient to exceed the conduction threshold of the control diodes.

Figure 3D is a schematic diagram of ring detector circuit 72, voltage detector circuit 73, and data switch detector 83. Conductor 151 is connected by switch 150 to either the TIP conductor of signal path 55 or the AD-TIP conductor of signal path 36. A switch 150 is not actually used in the preferred embodiment. Switch 150 is used to indicate the two options that are used. For Germany, conductor 151 is connected to the AD-TIP conductor. For all other countries, conductor 151 is connected to the TIP conductor. Conductor 151 is connected to conductor 157 through the parallel combination of resistor 154 and the two light emitting control diodes for optoisolator 155. The relay section of optoisolator 155 is connected by conductor 65B to the status buffer. Resistor 156 is a pullup resistor for conductor 65B. Conductor 157 is connected to the AD-G conductor of signal path 56. Resistors 154 and 156 and optoisolator 155 form data switch detector 83. When the data switch on the auxiliary device is pressed it connects the AD-G connector to the AD-RING connector. This causes current to flow through the control diodes of optoisolator 155, thereby closing the switch of optoisolator 155 and causing the STATUS signal on conductor 65B to become a logic zero. For countries where this circuit is not required conductor 151 is directly connected to conductor 157, resistors 154 and 156 and optoisolator 155 are deleted, and there is no connection to signal path 36.

Conductor 157 is connected to the RING conductor of signal path 55 through the series combination of capacitor 160, zener diode 161, node 162, diode 163, and resistor 164. Node 162 is connected to conductor 170 through the series combination of diodes 165 and 166 and resistor 167. Conductor 170 is connected to the RING conductor through resistor 171. Components 160 through 171 form an AC-coupled voltage dividing, half-wave rectifier network for the ring detector and the voltage detector circuits. The collector of transistor 183 is connected to pullup resistor 180 and to STATUS conductor 65C. The base of transistor 183 is connected through resistor 182 to jumper 181 and connected through the switch section of optoisolator 172 to pullup resistor 173. One contact of jumper 181 is grounded and the other contact is connected to the control diode of optoisolator 174 and to CONTROL conductor 64F. When a ringing signal is present on signal path 55 the control diodes of optoisolator 172 will be energized, thereby causing the switch of optoisolator 172 to close and pull the base of transistor 183 high, thereby causing the STATUS signal on conductor 65C to become a logic zero. Resistor 180 pulls the status signal to a logic one when the switch section of optoisolator 172 is open. The position of jumper 181 is not important for the detection of ringing signals. It will be appreciated that the status signal will switch between a logic zero and a logic one at the frequency of the ringing signal.

Conductor 170 is also connected to conductor 157 through the switch section of optoisolator 174 and resistor 175. Optoisolator 174 is controlled by the CONTROL signal on conductor 64F. When the CONTROL signal is a logic one the switch section of optoisolator 174 will be closed. In this case resistors 171 and 175 act as a voltage divider between the TIP and RING conductors of signal path 55 so that the control diodes of optoisolator 172 are energized, thereby closing the switch section of optoisolator 172 and causing the STATUS signal on conductor 65C to be a logic zero. However, if the voltage between the TIP and RING conductors is less than 40 to 45 volts the voltage provided to the control diodes of optoisolator 172 will be insufficient to energize these diodes and therefore the status signal will be a logic one. A jumper 181 can be used to disable the voltage detector. In the position shown, the voltage detector circuit is enabled. However, if jumper 181 is changed so that resistor 182 is connected to CONTROL conductor 64F then, whenever the control signal is a logic one, the status signal will be a logic zero. This feature is required for France but, for countries in which this feature is not required, a simpler circuit can be used. In these countries jumper 181, resistors 173, 175, and 182, transistor 183, and optoisolator 174 can be eliminated. In this case, one end of the switch of optoisolator 172 is connected to ground and the other end is connected to STATUS conductor 65C.

Figure 3E is a schematic diagram of pulse dialer 56 and off-hook resistance control circuit 60. Pulse dialer 56 has an optoisolator 200 which is controlled by the CONTROL signal on conductor 64G. The relay section of optoisolator 200 is connected between the TIP conductor of signal path 55 and the TIP conductor of signal path 53. The RING conductor is the same for signal paths 53 and 55. When the modem is on-hook, or doing the "break" part of the pulse dialing sequence, the control signal is a logic zero and the switch section represents an open circuit, thereby disconnecting the TIP conductors from each other. However, when the modem is off-hook, and during the "make" portion of the pulse dialing sequence, the control signal is a logic one and the relay section represents a closed switch, thereby connecting the TIP conductors together.

Off-hook resistance control circuit 60 has a resistor 201 and the switch section of an optoisolator 202 connected between the TIP and RING conductors of signal path 53. When the CONTROL signal on conductor 64H is a logic zero the control diode of optoisolator 202 is not energized and the switch section of optoisolator 202 is open. However, when the control signal is a logic one the switch section is closed, thereby presenting resistive load 201 between the TIP and RING conductors. Circuit 60 is not required for operation in the United States.

Figure 3F is a diagram of the memory 33 for the GLOP table. Signal path 86 includes serial data in, chip select, and clock conductors, connected to the appropriate inputs of the EEPROM 33. The data output of memory 33 is connected to the SERIAL DATA OUT conductor 87. In the preferred embodiment memory 33 is a National Semiconductor NMC9346 EEPROM. It will be appreciated that the memory can be both written to and read from using the three signals on signal path 86. In order to prevent alteration of the country-specific parameters contained in memory 33, controller 20 is programmed so as not to allow the user to write information to memory 33. Alternatively, controller 20 may allow the user to write information to memory 33 in bytes which are not used for the country-specific parameter information.

As previously stated, use of an EEPROM for memory 33 is preferred because a single line interface module 12, with appropriate programming, may be hardware-compatible with the requirements of several different countries. Therefore, for convenience in manufacturing, memory 33 is not programmed until it has been determined for which specific country the line interface module 12 is to be designated. This feature eliminates the need to have a plurality of ROM memories preprogrammed for the different countries and required to be physically inserted into module 12 after the specific country has been determined.

In the preferred embodiment, controller 20 reads the parameter values from memory 33 upon command by the user, such as by the DTE, a switch, or other appropriate device, and upon a reset operation, such as a power-up reset. Controller 20 performs a checksum calculation on the values read and compares the calculated checksum with the checksum value read from memory 33. If the checksums match the parameter values are stored in the memory associated with controller 20 and are used to configure the modem 10 for proper operation with respect to the telephone system of the specified country. If the checksum values do not match then an error condition is indicated to the user.

It will be appreciated from an inspection of Figure 2 that all of the components of Figure 2 are not required for operation in every country. However, Figure 3 is an example of how the line interface module 12 could be implemented if it were to contain all of the components. Although such a module would have a higher cost than a country-specific module, the exemplary module shown could eliminate the need to have a plurality of different types of interface modules. One module design would satisfy the physical requirements for all of the countries and the memory 33 would provide the country-specific parameters which would configure the modem 12 for operation in a specific country. However, the actual design of a board design for one or more specific countries will differ to some degree than the design for the module 12 shown because certain components will not be required. For example, components relating to leased line support are only required for the United States and Great Britain, components required for the bell shunt are only required for Great Britain, the data switch detector is only required for Germany, etc.

Although it is preferred that the memory 33 be programmed for only one specific country it will be appreciated that, by the use of a larger memory 33, the specific operating parameters for two or more countries can be provided. In such a case a single line interface module 12, being hardware compatible with a predetermined number of countries, would also contain, in memory 33, the specific operating requirements and parameters for each of the predetermined countries. In such case the user would, using a DTE or other appropriate device, instruct controller 20 which country was to be designated. Controller 20 would then extract the appropriate parameters for the designated country for memory 33 and operate accordingly. Therefore, the user would not have to replace the line interface module 12 as long as the hardware requirements for a particular country were satisfied.

TABLES 2-5, below, show the functional designations for different pins of the line interface module connectors 24 and 40, telephone line jack 14, and auxiliary device jack 15.

## TABLE 2

### US PIN CONNECTIONS

| Conn. 34/40 | Jack 14 | Jack 15 | Signal |
|---|---|---|---|
| 12 | 6 | | -- |
| 6 | 5 | | A |
| 1 | 4 | | Ring |
| 9 | 3 | | Tip |
| 11 | 2 | | A1 |
| 10 | 1 | | -- |
| 2 | | 6 | -- |
| 3 | | 5 | A1 |
| 7 | | 4 | AD-Tip |
| 4 | | 3 | AD-Ring |
| 8 | | 2 | A |
| 5 | | 1 | -- |

## TABLE 3

### GB PIN CONNECTIONS

| Conn. 34/40 | Jack 14 | Jack 15 | Signal |
|---|---|---|---|
| 12 | 6 | | Leased Line A |
| 6 | 5 | | Tip |
| 1 | 4 | | Earth* |
| 9 | 3 | | Shunt |
| 11 | 2 | | Ring |
| 10 | 1 | | Leased Line B |
| 2 | | 6 | --- |
| 3 | | 5 | AD-Ring |
| 7 | | 4 | Shunt |
| 4 | | 3 | Earth* |
| 8 | | 2 | AD-Tip |
| 5 | | 1 | --- |
| *Note: This signal is not used by the modem but is routed between pins 1 and 4 of Connector 34. | | | |

## TABLE 4

### FR PIN CONNECTIONS

| Conn. 34/40 | Jack 14 | Jack 15 | Signal |
|---|---|---|---|
| 12 | 6 | | --- |
| 6 | 5 | | Tip |
| 1 | 4 | | AD-Tip |
| 9 | 3 | | AD-Ring |
| 11 | 2 | | Ring |
| 10 | 1 | | --- |
| 2 | | 6 | --- |
| 3 | | 5 | --- |
| 7 | | 4 | --- |
| 4 | | 3 | --- |
| 8 | | 2 | --- |
| 5 | | 1 | --- |

## TABLE 5

### DE PIN CONNECTIONS

| Conn. 34/40 | Jack 14 | Jack 15 | Signal |
|---|---|---|---|
| 12 | 6 | | AD-Tip |
| 6 | 5 | | AD-Ring |
| 1 | 4 | | --- |
| 9 | 3 | | AD-G |
| 11 | 2 | | Ring |
| 10 | 1 | | Tip |
| 2 | | 6 | --- |
| 3 | | 5 | --- |
| 7 | | 4 | --- |
| 4 | | 3 | --- |
| 8 | | 2 | --- |
| 5 | | 1 | --- |

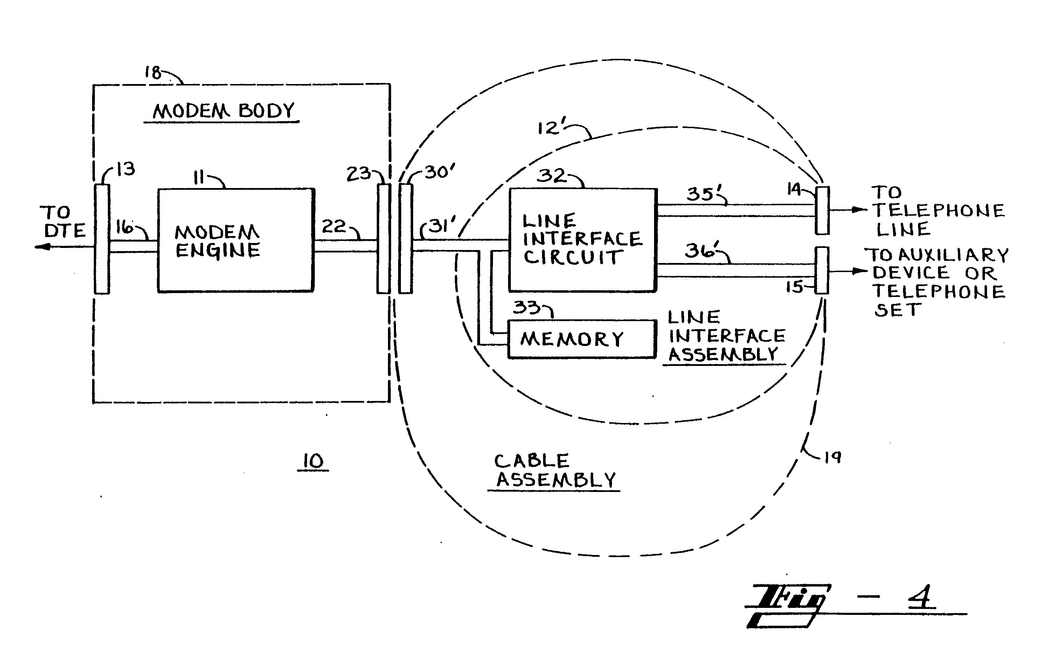

Figure 4 is a block diagram of another modem embodying the present invention. In this version the line interface assembly is not embodied in a line interface module 12, such as shown in Figure 1, which is installed in the modem 10. Instead, the line interface assembly 12' is part of a line interface cable assembly 19 which connects to the modem body 18 by a connector 30' and a cable 31', but which is otherwise physically separate from the modem body 10'. The line interface assembly 12' contains the line interface circuit 32 and the memory 33. Line interface circuit 32 is connected to telephone line jack 14 by signal path 35' and to auxiliary device jack 15 by signal path 36'. Line interface circuit 32 and memory 33 are preferably encapsulated/molded as part of the connecting cable assembly 19. Jacks 14 and 15 are specific to the country of interest.

Modem body 18 and cable assembly 19 form the modem 10. This embodiment is advantageous in that, if modem body 18 is installed inside the DTE, then it is not necessary to open up the DTE when it is desired to change the country of operation. Instead, cable assembly 19 is simply unplugged from modem body 18 and a new cable assembly 19 is plugged into modem body 18. Of course, it will be understood that connector 23 of modem body 18 is preferably accessible without having to open up the DTE.

Likewise, when a standalone modem body 18 is used it is not necessary to open up the modem body in order to change countries. Instead, cable assembly 19 is simply unplugged from modem body 18 and a new cable assembly 19 is plugged into modem body 18. This embodiment is advantageous in that it is posible to change countries simply by unplugging one cable assembly and plugging in another cable assembly, without having to open up the DTE or the modem. Each cable assembly 19 would have a line interface circuit 32 with the hardware necessary for operation in a specific country. Also, each cable assembly 19 would contain a memory 33 containing the parameters necessary for operation with respect to the telephone system of that country. As previously stated, where the same line interface circuit 32 is usable for more than one country, then it is also possible to have the parameters for more than one country in memory 33 so that the user can use a single cable assembly 19 for operation in several countries and, via the DTE of other appropriate method, instruct the controller 20 in modem engine 11 as to which country is being selected. In this embodiment line interface circuit 32 connects to jacks 14 and 15 through signals path 35' and 36' respectively, as there is no need for intermediate connectors 38 and 40 as shown in Figure 1.

As previously discussed with respect to the modem of Figure 1, the line interface circuit may be made part of modem engine 11, so that the cable assembly 19 contains jacks 14, 15 and 30 and memory 33. Also as previously discussed, memory 33 may contain parameters for more than one country.

Although the present invention has been particularly described with respect to a modem it will be appreciated that the present invention is not so limited. For example, the present invention is also applicable to facsimile machines and answering machines. In the case of a facsimile machine, modem engine 11 would be replaced by a facsimile engine or a modem/facsimile engine, and the connector 13 connection to the DTE would be replaced by a connector to the facsimile system scanning/reproducing circuitry or a personal computer (PC) for PC-facsimile applications. In this case the facsimile machine could be easily configured for use in a different country by replacing the line interface module 12 or the cable assembly 19 so that the overall facsimile machine was properly configured for operation in the desired country.

If multiple countries are in memory 33, selection of the desired country can be easily made by the use of switches, such as pushbuttons, and a display to indicate the country selected.

From the above description of the operation of the present invention variations and other embodiments of the present invention will suggest themselves to those of skill in the art. Therefore, the present invention is to be limited only by the claims below.

## Claims

1. A telecommunications device, comprising:
   a device engine module for transmitting and receiving data; and
   a line interface module functionally connected between said device engine module and a telephone line, said line interface module comprising a line interface circuit and a memory, said memory containing information related to telephone interface parameters for a predetermined country, said memory for providing said information to said device engine module, said line interface circuit for coupling signals corresponding to said data between said device engine module and said telephone line.

2. The telecommunications device of Claim 1 wherein:
   said device engine module comprises a first connector for connecting said telecommunications device to a telephone line, and a second connector for connecting said telecommunications device to an auxiliary device; and
   said line interface module comprises means, responsive to control signals from said device engine module, for selectably connecting and disconnecting said auxiliary device and said telephone line.

3. The telecommunications device of Claim 1 wherein said line interface circuit comprises:
   means for causing an off-hook condition on said telephone line in response to a control signal from said device engine module;
   means for coupling signals from said telephone line to said device engine module and for coupling signals from said device engine module to said telephone line; and
   means for providing to said device engine module an indication of incoming ringing signals on said telephone line.

4. The telecommunications device of Claim 1 and further comprising:
   a plurality of said line interface module, each said line interface module of said plurality containing said information for a different country.

5. The telecommunications device of Claim 1 and further comprising:
   a first set of conductors for connecting said line interface module to said telephone line;

a second set of conductors for connecting said line interface module to an auxiliary device;

a third set of conductors for transferring said signals corresponding to said data between said line interface module and said device engine module; and

a fourth set of conductors for transferring control and status signals between said device engine module and said line interface module.

6. The telecommunications device of Claim 5 wherein said third set of conductors comprises a first subset connected to said line interface circuit and a second subset connected to said memory.

7. The telecommunications device of Claim 1 wherein said memory comprises an electrically erasable programmable read only memory.

8. The telecommunications device of Claim 1 wherein said device engine module is a modem engine module.

9. The telecommunications device of Claim 1 wherein said device engine module is a facsimile engine module.

10. The telecommunications device of Claim 1 wherein said line interface module is embodied in a cable assembly.

11. The telecommunications device of Claim 10 wherein said line interface module further comprises a first connector for connection to said device engine module and a second connector for connection to said telephone line.

12. The telecommunications device of Claim 11 wherein said line interface module further comprises:

a third connector for connection to an auxiliary device; and

means, responsive to control signals from said device engine module, for selectably connecting and disconnecting said auxiliary device and said telephone line.

13. The telecommunications device of Claim 1 wherein said memory provides to said device engine module said information corresponding to at least one of the following telephone interface parameters: answer delay, black listing rules, call progress rules, commands supported, configuration, dialing rules, originate handshake, dial tone detection, pulse dialing, signal levels, and S-register default values.

14. A line interface module for functionally connecting a device engine to a telephone line, comprising:

a line interface circuit for coupling signals between said device engine and said telephone lines; and

a memory, containing information related to telephone interface parameters for a predetermined country, for providing said information to said device engine.

15. The line interface module of Claim 14 wherein said line interface circuit comprises:

means for causing an off-hook condition on said telephone line in response to a control signal from said device engine;

means for coupling signals from said telephone line to said device engine and for coupling signals from said device engine to said telephone line; and

means for providing to said device engine an indication of incoming ringing signals on said telephone line.

16. The line interface module of Claim 14 wherein said memory comprises an electrically erasable programmable read only memory.

17. The line interface module of Claim 14 wherein said line interface module is embodied in a cable assembly.

18. The line interface module of Claim 14 wherein said line interface module further comprises a first connector for connection to said device engine and a second connector for connection to said telephone line.

**19.** The line interface module of Claim 18 wherein said line interface module further comprises:

a third connector for connection to an auxiliary device; and

means responsive to a control signal from said device engine for selectably connecting and disconnecting said auxiliary device and said telephone line.

**20.** The line interface module of Claim 14 wherein said memory provides, to said device engine, said information corresponding to at least one of the following telephone interface parameters: answer delay, black listing rules, call progress rules, commands supported, configuration, dialing rules, originate handshake, dial tone detection, pulse dialing, signal levels, and S-register default values.

Fig — 1

Fig-2A

| NOTES: DEVICES USED IN THE INDICATED COUNTRIES | | | | | | | | | | |
|---|---|---|---|---|---|---|---|---|---|---|
| # | US | GB | FR | DE | IT | NL | CH | ES | IE | SE |
| 1 | | | | ✓ | | ✓ | | | | |
| 2 | | | ✓ | ✓ | | ✓ | | | | |
| 3 | | ✓ | | | | | | | | |
| 4 | | | ✓ | | | | | | | |
| 5 | | ✓ | ✓ | ✓ | ✓ | ✓ | ✓ | ✓ | ✓ | ✓ |
| 6 | ✓ | ✓ | | | | | | | | |
| 7 | | | | ✓ | | | | | | |

*Fig – 2B*

86

33

EPROM

+V

SERIAL DATA IN → SI

CHIP SELECT → CS

CLOCK →

SO → 87 → SERIAL DATA OUT

GND

*Fig – 3F*

EP 0 459 279 A1

Fig - 3A

Fig - 3B

Fig - 3C

EP 0 459 279 A1

Fig - 3D

Fig - 3E

MODEM BODY

TO DTE

MODEM ENGINE

LINE INTERFACE CIRCUIT

MEMORY

LINE INTERFACE ASSEMBLY

TO TELEPHONE LINE

TO AUXILIARY DEVICE OR TELEPHONE SET

CABLE ASSEMBLY

Fig - 4

EP 0 459 279 A1

# EUROPEAN SEARCH REPORT

**European Patent Office**

Application Number

**EP 91 10 8221**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | US-A-4 841 561   (G.P.HILL)<br>* column 1, line 52 - column 2, line 50 * * column 3, line 11 - column 4, line 44 * * column 6, line 34 - line 45 * * column 10, line 66 - column 11, line 1 *<br>– – – | 1,3,4,7,8, 13-16,20, 2,5 | H 04 M 11/06 |
| X,Y | EP-A-0 309 627   (INTERNATIONAL BUSINESS MA-CHINES)<br>* page 3, line 51 - page 4, line 20 * * page 6, line 26 - line 29 *<br>– – – | 1,4,14,10, 17 | |
| Y,A | US-A-4 799 144   (B. PARRUCK ET AL.)<br>* column 5, line 34 - column 6, line 21 *<br>– – – | 2,5,11,12, 18,19 | |
| Y,A | WO-A-8 703 764   (DIGITAL EQUIPMENT CORPORATION)<br>* abstract * * page 5, line 4 - line 14 *<br>– – – – – | 10,17,1, 14 | |
| | | | **TECHNICAL FIELDS SEARCHED (Int. Cl.5)**<br><br>H 04 M<br>H 04 L |

The present search report has been drawn up for all claims

| Place of search | Date of completion of search | Examiner |
|---|---|---|
| The Hague | 07 August 91 | STAESSEN B.F. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document